(19) Europäisches Patentamt
European Patent Office
Office européen des brevets

(11) **EP 3 771 117 A1**

(12) **EUROPEAN PATENT APPLICATION**

(43) Date of publication:
**27.01.2021 Bulletin 2021/04**

(51) Int Cl.:
***H04B 10/70*** *(2013.01)*

(21) Application number: **19188180.4**

(22) Date of filing: **24.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Österreichische Akademie der Wissenschaften**
**1010 Wien (AT)**

(72) Inventors:
• **Handsteiner, Johannes**
  **1020 Wien (AT)**
• **Herbst, Thomas**
  **3300 Winklarn (AT)**
• **Scheidl, Thomas**
  **2722 Winzendorf (AT)**
• **Steinlechner, Fabian**
  **07745 Jena (DE)**

(74) Representative: **Louis Pöhlau Lohrentz**
**Patentanwälte**
**Merianstrasse 26**
**90409 Nürnberg (DE)**

(54) **METHOD TO SET A COMMON POLARIZATION REFERENCE FRAME**

(57) This invention concerns a method to provide a common polarization reference frame between an emitter and a receiver. The emitter comprises a source to produce polarized photons in at least two non-orthogonal polarizations, and the receiver comprises a detection means to determine the polarization of the polarized photons in at least two non-orthogonal polarization states, wherein the emitter and receiver are connected via an optical channel. The optical channel comprises a transmission means to guide the polarized photons from the emitter to the receiver, and a first correction means. The first correction means consists of a first correction component and a second correction component. The method comprises the steps of

I) providing a local polarization reference frame with a local polarization reference means in the emitter with at least two complementary or non-orthogonal polarization states, a first local polarization reference state and a second local polarization reference state,

II) performing one or more calibration steps by adjusting the first correction component of the correction means and maximization and/or minimization of the detected photons in the detection means in the receiver in the first reference polarization state, in order to set the first local polarization reference state in the receiver,

III) performing one or more calibration steps by adjusting the second correction component of the correction means and maximization and/or minimization of the detected photons in the detection means in the receiver in the second reference polarization state, in order to set the second local polarization reference state in the receiver.

*Fig. 1a*

EP 3 771 117 A1

## Description

The invention concerns a method to provide a common polarization reference frame between an emitter and one or two receivers and comprising an emitter and one or two receivers with a common polarization reference frame. The emitter comprises a source to produce polarized photons in at least two non-orthogonal polarizations or polarization entangled photon pairs, and the receiver/s comprise(s) a detection means to determine the polarization of the polarized photons in at least two non-orthogonal polarization states, wherein the emitter and receivers are connected via optical channels.

Quantum communication, for example used for quantum key distribution (QKD), is using single photons for a secure and robust communication. For the communication, a common reference frame between the emitter and the one or more receivers has to be accomplished to compensate unknown polarization-transformation introduced by the transmission channel. To do so, the alignment was realized by a time-consuming method to ensure a common reference frame by an iteration of several alignment steps and the comparison of at least two non-orthogonal states in the emitter and the receivers. The typical approach is to align two basis vector sets iteratively (e.g. H horizontal and V vertical linearly polarized photons and +45° and -45° linearly polarized photons), where each iteration step affects the other basis set less.

An objective of the present invention is to provide an improved method to set a common polarization reference between the emitter and one receiver or more receivers.

The method to provide a common polarization reference frame between an emitter and a receiver is achieved by the method according to claim 1.

The emitter comprises a source to produce polarized photons in at least two non-orthogonal polarizations, and the receiver comprises a detection means to determine the polarization of the polarized photons in at least two non-orthogonal polarization states, wherein the emitter and receiver are connected via an optical channel. The optical channel comprises a transmission means to guide the polarized photons from the emitter to the receiver, and a first correction means to correct any unitary transformation of the polarization of the photons caused by the optical channel. The first correction means consists of a first correction component and a second correction component, wherein preferably the first and second correction components are separate components. The method comprises the steps of

I) providing a local polarization reference frame with a local polarization reference means in the emitter with at least two complementary or non-orthogonal polarization states, a first local polarization reference state and a second local polarization reference state,

II) performing one or more calibration steps by adjusting the first correction component of the correction means and maximization and/or minimization of the detected photons in the detection means in the receiver in the first reference polarization state, in order to set the first local polarization reference state in the receiver,

III) performing one or more calibration steps by adjusting the second correction component of the correction means and maximization and/or minimization of the detected photons in the detection means in the receiver in the second reference polarization state, in order to set the second local polarization reference state in the receiver.

A very useful way to visualize polarization states and their transformations is the geometrical representation on the Poincare sphere. In this representation, a pure state corresponds to a point on the surface of the sphere with polar coordinates theta and phi. Polarization qubits can be conveniently detected and manipulated using only simple optical devices such as wave plates and polarizers and any unitary (coherence conserving) transformation introduced by birefringent elements can be understood as a rotation of the polarization states on the Poincare-sphere about a particular axis. A key prerequisite for polarization-mode encoded quantum communication is setting and maintaining a common polarization reference frame between the emitter, preferably the source and the receiver, preferably the detection means. I.e., any polarization vector on the Poincare-sphere in the source reference frame must be mapped to some known counterpart on the Poincare-sphere at the receiver. For example, the source reference frame is defined by the labeling of the axes of the non-linear crystal or a polarizer in the emitter. The mapping is equivalent to undoing any unitary transformation introduced from the source to the receiver and matching the computational basis polarizations (H horizontal linear polarization and V vertical linear polarization). However, since quantum information processing protocols usually involve measurements in a second, non-orthogonal measurement basis, any superposition of the modes (for example $D = H + V$ diagonal linear polarization and $A = H - V$ antidiagonal linear polarization) must also be matched from the source to the receiver, thus mapping the coherent measurement basis from the source to the receiver.

Here, a simple two-step alignment method is proposed that ensures complete alignment of the entire Poincare-sphere from transmitter to receiver without the need for iterative alignment of two mutually unbiased measurement bases. A logic computational basis between the emitter and the receiver is matched first with the first correction component. In a second step, the coherent measurement basis is aligned, decoupled form the adjustment of the logic computational basis. The alignment of the first step ensures that the first basis is set between the emitter and the receiver, and is ambiguous with respect to the relative phase phi. This transformation can be understood as a rotation of the Poincare-sphere, for example about the axis combining H and V. This remaining Poincare-sphere transformation is adjusted in the manner that does not introduce an additional rotation of the first basis (as an example here the H/V basis), by introducing only an additional relative variable phase between the basis vectors of the polarization basis used for the alignment in the first step. This can be achieved, for example, using a tilted wave-plate, a quarter-wave/half-wave/quarter-wave combination, a Soleil Babinet Compensator that introduces only a relative phase.

The object of the invention is also achieved by an apparatus to provide a common reference frame between an emitter and one receiver in at least two non-orthogonal polarization states, wherein the emitter comprises a source to produce polarized photons in at least two non-orthogonal polarizations, and wherein the receiver comprises a detection means to determine the polarization of the polarized photons in at least two non-orthogonal polarization states, and wherein the emitter and receiver are connected via an optical channel comprising a transmission means to guide the polarized photons from the emitter to the receiver, and a first correction means to correct any unitary transformation of the polarization of the photons caused by the optical channel, and wherein the first correction means consists of at least two separate components, a first correction component and a second correction component.

In a preferred embodiment of the methods and the apparatus with one receiver, the first and/or the second correction component of the first correction means comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer.

In a preferred embodiment of the methods and the apparatus with one receiver, the local polarization reference means comprises one of a polarizing means, or a polarizing beam splitter, or a polarizer, or down converted photons, or a non-linear crystal, or a laser producing polarized photons. In a preferred embodiment of the methods and the apparatus with one receiver, the local polarization reference means comprise in addition an optical element to change the polarization of the photons in at least two non-orthogonal polarizations, preferably a wave plate.

In a preferred embodiment of the methods with one receiver, the calibration step of the first correction component is performed in order to compensate the unitary transformation of the first emitter polarization state caused by the optical channel.

In a preferred embodiment of the methods and the apparatus with one receiver, the calibration step of the second correction component is performed in order to compensate the unitary transformation of the second emitter polarization state caused by the optical channel.

In a preferred embodiment of the methods and the apparatus with one receiver, whereas each receiver can measure the photons in at least two orthogonal states in its non-orthogonal basis.

In a preferred embodiment of the methods and the apparatus with one receiver, the transmission channel is a free-space channel, preferably air or vacuum or any other atmosphere or a liquid. In a preferred embodiment of the methods and the apparatus with one receiver, the first correction component of the first correction means comprises a variable wave-plate, or a tilted wave-plate, or a Babinet-soleil compensator, or a combination of a first quarter wave-plate, a half wave-plate, and a second quarter-wave plate. In a preferred embodiment of the methods and the apparatus with one receiver, the second correction component of the first correction means comprises a variable wave-plate, or a tilted wave-plate, or a Babinet-soleil compensator, or a combination of a first quarter wave-plate, a half wave-plate, and a second quarter-wave plate.

In a preferred embodiment of the methods and the apparatus with one receiver the transmission channel is the wave guide, preferably a fiber.

In a preferred embodiment of the methods and the apparatus with one receiver, the transmission means comprises two coupling means and a waveguide, preferably a fiber, connecting the two coupling means, wherein the first coupling means couples the photons from the emitter into the fiber and the second coupling means couples the photons out of the fiber into the first receiver. In a preferred embodiment of the methods and the apparatus with one receiver, the first correction component of the first correction means comprises a first quarter wave-plate, and a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools, of the fiber or a rotatable fiber squeezer in the fiber. In a preferred embodiment of the methods and the apparatus with one receiver, the second correction component of the first correction means comprises a variable wave-plate, or a tilted wave-plate, or a soleil Babinet compensator, or a combination of a first quarter wave-plate, a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools of the fiber, or a rotatable fiber squeezer in the fiber.

In a preferred embodiment of the methods with one receiver, the first or the second emitter polarization state is a linear horizontal/vertical, or linear 45°/-45° polarization or left/right circular polarization.

As an example, here the alignment and calibration for an emitter, which produces at least horizontal and diagonal polarized photons is explained. The local reference frame can for example be set with a polarizer. Sending horizontal polarized photons (H) from the emitter to the receivers, the detected events at the receiver in the corresponding vertical (V) detector should be minimized by the first correction means. Subsequently, diagonal polarized photons (D) are transmitted to the receiver and the corresponding detected events at the receiver in the corresponding antidiagonal (A) detector should be minimized by the second correction means.

In a preferred embodiment of the methods, the common polarization reference frame is provided between an emitter and two receivers, wherein the emitter is a laser or a photon source producing polarized photons in at least two non-orthogonal polarizations, and wherein the first receiver comprises a first detection means to determine the polarization of the polarized photons in at least two non-orthogonal polarization stats, and the second receiver comprises a second detection means to determine the polarization of the polarized photons in at least two non-orthogonal polarization states. A first optical channel, connecting the emitter and the first receiver, comprising a first transmission means to guide the polarized photons from the emitter to the first receiver, and a second optical channel, connecting the emitter and the second receiver, comprising a second transmission means to guide the polarized photons from the emitter to the second receiver, and wherein the first optical channel comprises a first correction means to correct any unitary transformation of the polarization of the photons caused by the first optical channel, and/or wherein the second optical channel comprises a second correction means to correct any unitary transformation of the polarization of the photons caused by the second optical channel, and wherein the first and/or second correction means each consists respectively of a first correction component and a second correction component, wherein the emitter sends polarized photons in the first optical channel to the first receiver and in the second optical channel to the second receiver, wherein the calibration of the common polarization reference frame between the emitter and the first and/or second receiver, or between the first and the second receiver is according to one of the methods described above.

In a preferred embodiment of the apparatus, the common polarization reference frame is provided between an emitter and two receivers, wherein the emitter comprises a laser or a photon source producing polarization photons in at least two non-orthogonal polarizations, wherein the first receiver comprises a first detection means to determine the polarization of the polarized photons in at least two non-orthogonal polarization states and the second receiver comprises a second detection means to determine the polarization of the polarized photons in at least two non-orthogonal polarization states, wherein the laser or the photon source and the first receiver are connected via a first optical channel comprising a first transmission means to guide the polarized photons from the emitter to the first receiver, and a first correction means to correct any unitary transformation of the polarization of the photons caused by the first optical channel, and wherein the laser or the photon source and the second receiver are connected via a second optical channel comprising a second transmission means to guide the polarized photons from the emitter to the second receiver, and a second correction means to correct any unitary transformation of the polarization of the photons caused by the second optical channel, wherein the emitter sends polarized photons in the first optical channel to the first receiver and in the second optical channel to the second receiver, wherein the first and/or second correction means consists respectively of a first correction component and a second correction component.

In a preferred embodiment of the methods and the apparatus with two receivers, the first and/or the second correction component of the first and/or the second correction means comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer in the fiber.

In a preferred embodiment of the methods and the apparatus with two receivers, the local polarization reference means comprises one of a polarizing means, or a polarizing beam splitter, or a polarizer, or down converted photons, or a non-linear crystal, or a laser producing polarized photons. In a preferred embodiment of the methods and the apparatus with two receivers, the local polarization reference means comprises in addition an optical element to change the polarization of the photons in at least two non-orthogonal polarizations, preferably a wave plate.

In a preferred embodiment of the methods with two receivers, the first or the second emitter polarization state is a linear horizontal/vertical, or linear 45°/-45° polarization or left/right circular polarization.

In a preferred embodiment of the methods with two receivers, the calibration step of the first correction component of the first correction means is performed in order to compensate the unitary transformation of the first emitter polarization state caused by the first optical channel.

In a preferred embodiment of the methods with two receivers, the calibration step of the first correction component of the second correction means is performed in order to compensate the unitary transformation of the first emitter polarization state caused by the second optical channel.

In a preferred embodiment of the methods with two receivers, the calibration step of the second correction component of the first correction means is performed in order to compensate the unitary transformation of the second emitter polarization state caused by the first optical channel.

In a preferred embodiment of the methods with two receivers, the calibration step of the second correction component of the second correction means is performed in order to compensate the unitary transformation of the second emitter polarization state caused by the second optical channel.

In a preferred embodiment of the methods and the apparatus with two receivers, each receiver can measure the photons in at least two orthogonal states in its non-orthogonal basis.

In a preferred embodiment of the methods and the apparatus with two receivers, the photon source is an entangled photon source producing polarization entangled photon pairs, wherein one photon of each entangled photon pair is sent in the first optical channel to the first receiver and the second photon of each entangled photon pair is sent in the second optical channel to the second receiver.

In a preferred embodiment of the methods with an emitter and two receivers, the method comprises the further steps of

IV) performing one or more calibration steps by adjusting the first correction component of the first and/or second correction means and maximization and/or minimization of the correlations of the entangled photon pairs in both receivers in the first emitter polarization state in order to set the first local polarization state in the first and/or second receiver, and/or

V) performing one or more calibration steps by adjusting the second correction component of the first and/or second correction means and maximization and/or minimization of the correlations of the entangled photon pairs in both receivers in the second emitter polarization state in order to set the second local polarization state in the first and/or second receiver.

In a preferred embodiment of the methods with two receivers, the local polarization reference frame in step I) is set by a polarizing beam splitter, or a polarizer, or the polarization of a down converted photon, or the axes of a non-linear crystal, and the propagation of the photon beam through this optical component, or is set by the detection means of the first receiver comprising a polarizing beam splitter, or a polarizer.

In a preferred embodiment of the methods and the apparatus with two receivers, the first and/or second transmission channel is/are free-space channel/s, preferably air or vacuum or any other atmosphere or a liquid. In a preferred embodiment of the methods and the apparatus with two receivers, the first correction component of the first and/or second correction means comprises a variable wave-plate, or a tilted wave-plate, or a Babinet-soleil compensator, or a combination of a first quarter wave-plate, a half wave-plate, and a second quarter-wave plate. In a preferred embodiment of the methods and the apparatus with two receivers, the second correction component of the first and/or second correction means comprises a variable wave-plate, or a tilted wave-plate, or a Babinet-soleil compensator, or a combination of a first quarter wave-plate, a half wave-plate, and a second quarter-wave plate.

In a preferred embodiment of the methods and the apparatus with two receivers, the transmission channel is a wave guide, preferably a fiber. In a preferred embodiment of the methods and the apparatus with two receivers, the first and/or second optical channel comprises two coupling means and a waveguide, preferably a fiber, connecting the two coupling means, wherein the first coupling means couples the photons from the emitter into the fiber and the second coupling means couples the photons out of the fiber into the first and/or second receiver. In a preferred embodiment of the methods and the apparatus with two receivers, the first correction component of the first and/or second correction means comprises a first quarter wave-plate, and a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools, of the fiber or a rotatable fiber squeezer in the fiber.

In a preferred embodiment of the methods and the apparatus with two receivers, the second correction component of the first and/or second correction means comprises a variable wave-plate, or a tilted wave-plate, or a soleil Babinet compensator, or a combination of a first quarter wave-plate, a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools of the fiber, or a rotatable fiber squeezer in the fiber.

The object of the invention is also achieved by a method to provide an emitter and two receivers with a common polarization reference frame according to claim 7.

The emitter is an entangled photon source, producing polarization entangled photon pairs, and wherein the first receiver comprises a first detection means to determine the polarization of the polarized photons in at least two non-orthogonal polarization states and the second receiver comprises a second detection means to determine the polarization of the polarized photons in at least two non-orthogonal polarization states, and a first optical channel, connecting the emitter and the first receiver, comprising a first transmission means to guide the polarized photons from the emitter to the first receiver, and a second optical channel, connecting the emitter and the second receiver, comprising a second transmission means to guide the polarized photons from the emitter to the second receiver, and wherein one photon of each entangled photon pair is sent in the first optical channel to the first receiver and the second photon of each entangled photon pair is sent in the second optical channel to the second receiver, wherein the first optical channel comprises a first correction means to correct any unitary transformation of the polarization of the photons caused by the first optical channel, and/or wherein the second optical channel comprises a second correction means to correct any unitary transformation of the polarization of the photons caused by the second optical channel, and/or wherein the emitter comprises a first and/or second correction means to correct any unitary transformation of the polarization of the photons caused by the first and/or second optical channel and

wherein the first and/or second correction means each consists respectively of a first correction component and a second correction component, and wherein the calibration of the common polarization reference frame between the emitter and the first and/or second receiver or the first and the second receiver is according to the steps

I) providing a local polarization reference frame with a local polarization reference means in the emitter with at least two complementary or non-orthogonal polarization states, a first local polarization reference state and a second local polarization reference state,

II) performing one or more calibration steps by adjusting the first correction component of the first and/or second correction means and maximization and/or minimization of the correlations of the entangled photon pairs in both receivers in the first local polarization reference state, in order to set the first local polarization reference state in the first and/or second receiver,

III) performing one or more calibration steps by adjusting the second correction component of the first and/or second correction means and maximization and/or minimization of the detection of the correlations of the entangled photon pairs in both receivers in the second local polarization reference state, in order to set the second local polarization reference state in the first and/or second receiver.

As an emitter, an entangled photons can be produced via numerous schemes by an entangled photon source, for example by spontaneous parametric downconversion in a non-linear crystal. With an entangled photon source, for example, a maximally polarization-entangled Bell state like

$$|\Phi\rangle = \frac{1}{\sqrt{2}}\left(|H\rangle|H\rangle + e^{i\varphi}|V\rangle|V\rangle\right) \ or \ |\Psi\rangle = $$

$$\frac{1}{\sqrt{2}}\left(|H\rangle|V\rangle + e^{i\varphi}|H\rangle|V\rangle\right)$$ can be produced. The unique quantum feature of such entangled Bell states is that they also exhibit correlations in other measurement bases. In order to exploit the polarization correlations, for example, in quantum information processing, the photon pairs must be transmitted to the first and second receivers (Alice and Bob) in a transmission channel. One or both transmission channels can introduce a transformation of the polarization reference frame. Due to that, the emitter and the first and second receivers (Alice and Bob) must set a common polarization reference frame. With common polarization reference frame in the emitter and both receivers, for example, the nonlocal correlations in the entangled state can be verified, exploited and used.

A very useful way to visualize polarization states and their transformations is the geometrical representation on the Poincare sphere. In this representation, a pure state corresponds to a point on the surface of the sphere with polar coordinates theta and phi. Polarization qubits can be conveniently detected and manipulated using only simple optical devices such as wave plates and polarizers and any unitary (coherence conserving) transformation introduced by birefringent elements can be understood as a rotation of the polarization states on the Poincare-sphere about a particular axis. A key prerequisite for polarization-mode encoded quantum communication is setting and maintaining a common polarization reference frame between the emitter, preferably the source and the receivers, preferably the detection means. I.e., any polarization vector on the Poincare-sphere in the source reference frame must be mapped to some known counterpart on the Poincare-sphere at the receivers. For example, the source reference frame is defined by the labeling of the axes of the non-linear crystal or a polarizer in the emitter. The mapping is equivalent to undoing any unitary transformation introduced from the source to the receivers and matching the computational basis polarizations (H horizontal linear polarization and V vertical linear polarization). However, since quantum information processing protocols usually involve measurements in a second, non-orthogonal measurement basis, any superposition of the modes (for example $D = H + V$ diagonal linear polarization and $A = H - V$ antidiagonal linear polarization) must also be matched from the source to the receivers, thus mapping the coherent measurement basis from the source to the receivers.

Here, a simple two-step alignment method is proposed that ensures complete alignment of the entire Poincare-sphere from transmitter to receivers without the need for iterative alignment of two mutually unbiased measurement bases. A logic computational basis between the emitter and the receivers is matched first with the first correction component. In a second step, the coherent measurement basis is aligned, decoupled from the adjustment of the logic computational basis. The alignment of the first step ensures that the first basis is set between the emitter and the receivers, and is ambiguous with respect to the relative phase phi. This transformation can be understood as a rotation of the Poincare-sphere, for example about the axis combining H and V. This remaining Poincare-sphere transformation is adjusted in the manner that does not introduce an additional rotation of the first basis (as an example here the H/V basis), by introducing only an additional relative variable phase between the basis vectors of the polarization basis used for the alignment in the first step. This can be achieved, for example, using a tilted wave-plate, a quarter-wave/half-wave/quarter-wave combination, a Soleil Babinet Compensator that introduces only a relative phase with respect to the H/V basis of the entangled photon source, or a polarizer or polarizing beam splitter in the receiver. In the case of a polarization-entangled photon source, this phase can also be absorbed into the phase of the entangled photon generation.

In a preferred embodiment of the apparatus, the common polarization reference frame is provided between an emitter and two receivers, wherein the emitter comprises an entangled photon source, wherein the first receiver comprises a first detection means to determine the polarization of the polarized photons in at least two non-orthogonal polarization states and the second receiver comprises a second detection means to determine the polarization of the polarized photons in at least two non-orthogonal polarization states, and a first optical channel, connecting the emitter and the first receiver, comprising a first transmission means to guide the polarized photons from the emitter to the first receiver, and a second optical channel, connecting the emitter and the second receiver, comprising a second transmission means to guide the polarized photons from the emitter to the second receiver, and wherein one photon of each entangled photon pair is sent in the first optical channel to the first receiver and the second photon of each entangled photon pair is sent in the second optical channel to the second receiver, wherein the first optical channel comprises a first correction means to correct any unitary transformation of the polarization of the photons caused by the first optical channel, and/or wherein the second optical channel comprises a second correction means to correct any unitary transformation of the polarization of the photons caused by the second optical channel, and/or wherein the emitter comprises a first and/or second correction means to correct any unitary transformation of the polarization of the photons caused by the first and/or second optical channel and wherein the first and/or second correction means each consist respectively of a first correction component and a second correction component.

In a preferred embodiment of the methods and the apparatus with two receivers, the first and/or the second correction component of the first and/or the second correction means comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer in the fiber or the first and/or the second correction component is realized by changing the pump polarization of the entangled photon source.

In a preferred embodiment of the methods and the apparatus with two receivers, the local polarization reference means comprises one of a polarizing means, or a polarizing beam splitter, or a polarizer, or down converted photons, or a non-linear crystal.

In a preferred embodiment of the methods with two receivers, the calibration step of the first correction component of the first correction means is performed in order to compensate the unitary transformation of the first emitter polarization state caused by the first and/or second optical channel.

In a preferred embodiment of the methods with two receivers, the calibration step of the first correction component of the second correction means is performed in order to compensate the unitary transformation of the first emitter polarization state caused by the first and/or second optical channel.

In a preferred embodiment of the methods and the apparatus with two receivers, the calibration step of the second correction component of the first correction means is performed in order to compensate the unitary transformation of the second emitter polarization state caused by the first and/or second optical channel.

In a preferred embodiment of the methods and the apparatus with two receivers, the calibration step of the second correction component of the second correction means is performed in order to compensate the unitary transformation of the second emitter polarization state caused by the first and/or second optical channel.

In a preferred embodiment of the methods with two receivers, the local polarization reference frame in step I) is set by the polarization of down converted photons, or the axes of a non-linear crystal, and the propagation of the photons through this optical component, or by a polarizing beam splitter in a Sagnac entangled photon source.

In a preferred embodiment of the methods and the apparatus with two receivers, each receiver can measure the photons in at least two orthogonal states in its non-orthogonal basis.

In a preferred embodiment of the methods and the apparatus with two receivers, the emitter comprises the entangled photon source and one or two coupling means with a first part of a waveguide. The transmission means consist of the remaining waveguide to the receivers. In this embodiment, the coupling means and a part of the waveguides are part of the emitter, preferably parts of the entangled photon source. This allows, for example, that the first correction component in the emitter can be arranged in the waveguide and the second correction component in the emitter can be arranged in the entangled photon source.

In a preferred embodiment of the methods and the apparatus with two receivers, the first and/or second transmission channel is/are a free-space channel/s, preferably air or vacuum or any other atmosphere or a liquid. In a preferred embodiment of the methods and the apparatus with two receivers, the first correction component of the first and/or second correction means comprises a first quarter wave-plate, a half wave-plate, and a second quarter-wave plate or is realized by changing the pump polarization of the entangled photon source. In a preferred embodiment of the methods and the apparatus with two receivers, the second correction component of the first and/or second correction means comprises a variable wave-plate, or a tilted wave-plate, or a Babinet-soleil compensator, or a combination of a first quarter wave-plate, a half wave-plate, and a second quarter-wave plate or is realized by changing the pump polarization of the entangled photon source.

In a preferred embodiment of the methods and the apparatus with two receivers, the transmission channel is a wave guide, preferably a fiber.

In a preferred embodiment of the methods and the apparatus with two receivers, the first and/or second optical channel comprises one coupling means and a waveguide, preferably a fiber, connecting the optical channel to the first and/or second receiver, wherein the first coupling means couples the photons from the emitter into the fiber. In a preferred embodiment of the methods and the apparatus with two receivers, the first and/or second optical channel comprises two coupling means and waveguide, preferably a fiber, connecting the two coupling means, wherein the first coupling means couples the photons from the emitter into the fiber and the second coupling means couples the photons out of the fiber into the first and/or second receiver. In a preferred embodiment of the methods and the apparatus with two receivers, the first correction component of the first and/or second correction means comprises a first quarter wave-plate, and a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools, of the fiber or a rotatable fiber squeezer in the fiber or is realized by changing the pump polarization of the entangled photon source.

In a preferred embodiment of the methods and the apparatus with two receivers, the second correction component of the first and/or second correction means comprises a variable wave-plate, or a tilted wave-plate, or a soleil Babinet compensator, or a combination of a first quarter wave-plate, a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools of the fiber, or a rotatable fiber squeezer in the fiber or is realized by changing the pump polarization of the entangled photon source.

In a preferred embodiment of the methods with two receivers, the first or the second emitter polarization state is a linear horizontal/vertical, or linear 45°/-45° polarization or left/right circular polarization.

As an example, here the alignment and calibration for a polarization-entangled photon source as an emitter with a local reference frame defined by the axes of the non-linear crystal is explained. The local reference frame can also be set by a polarizing beam splitter in a Sagnac loop source, producing entangled photons or by pumping the photon source to produce, for example, only HH photons. These polarization measurements are performed using polarizers in the transmission channels. For example, the maximally-entangled Psi- state exhibits anti-correlation in any measurement basis. In order to set this state also in the receiver, it is sufficient to ensure that the joint detection probability for H/H coincidence detection of photon pairs between both receivers are minimized (with H as linear horizontal polarization and V as linear vertical polarization). I.e., when the two polarizers are in parallel, or the photon source is pumped to produce only HH photons (denoting H as horizontal linear polarization in both polarizer), the first correction component of the first and/or second correction means has to be set to detect a minimum of coincidence counts (two-photon detection events of photon pairs).

Once this has been achieved (for example by comparison of the contrast of H/H and H/V coincidence counts), the local polarization measurement is changed to another measurement basis in the local reference frame, a non-orthogonal state to the first H/H polarization state. In the example of the Phi- state, a minimum of coincidence counts (two-photon detection events of photon pairs) is also expected for measurement in the 45°/-45° measurement basis (with 45° as linear polarization at 45° and -45° as linear polarization at -45°). This is also expected for left and right circular polarization. This can be achieved by changing the pump polarization of the entangled photon source, specifically the relative phase phi between the horizontal and vertical pump photon components. This can also be achieved by a second correction means comprising a variable wave-plate, or a tilted wave-plate, or a soleil Babinet compensator, or a combination of a first quarter wave-plate, a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools of the fiber, or a rotatable fiber squeezer in the fiber.

The alignment of the first step has ensured in this example that the first basis is set between the emitter and the receivers, and is ambiguous with respect to the relative phase phi. This transformation can be understood as a rotation of the Poincare-sphere about the axis combining H and V. This remaining Poincare-sphere transformation is adjusted in the manner that does not introduce an additional rotation of the H/V basis, by introducing only an additional relative variable phase between the basis vectors of the polarization basis used for the alignment in the first step. This can be achieved, for example using a tilted wave-plate, a quarter-wave/half-wave/quarter-wave combination, a Soleil Babinet Compensator that introduces only a relative phase with respect to the H/V basis of the entangled photon source, or a polarizer or polarizing beam splitter in the receiver. In the case of a polarization-entangled photon source, this phase can also be absorbed into the phase of the entangled photon generation.

In the same way, the common reference frame can be set with any other entangled state taking the correlations or anti-correlations of the specific stats for any measurement basis into account.

The object of the invention is in addition achieved by a control device capable of providing a method according to one the methods described above with one receiver, wherein the control device is connected with the first correction means and with the first detection means, and preferably with the local polarization reference means.

The object of the invention is in addition achieved by a control device capable of providing a method according to one of the methods described above with two receivers, wherein the control device is connected with the first and/or second correction means and with the first and/or second detection means, and preferably with the local polarization reference means.

The object of the invention is in addition achieved by a computer device with a microprocessor with a nonvolatile memory, wherein the nonvolatile memory comprises an executable program in order to provide a method according to one of the methods described above, preferably wherein the computer device is the control device.

In the following, the invention will be explained by way of preferred embodiments illustrated in the drawings, yet without being restricted thereto. In the drawings:

Fig. 1a schematic setup with an emitter and a receiver to provide a common polarization reference frame;

Fig. 1b schematic setup with an emitter and two receivers to provide a common polarization reference frame;

Fig. 2a first embodiment of the inventive correction means with a tilted wave-plate as second correction component;

Fig. 2b second embodiment of the inventive correction means with a Babinet compensator as second correction component;

Fig. 2c third embodiment of the inventive correction means with a first quarter-wave plate, a half wave-plate and a second quarter-wave plate as second correction component;

Fig. 3 a linear entangled photon source as an emitter and two receivers and two correction components in the transmission channels;

Fig. 4a correction means in a free-space channel with a coupling means from a free-space in a fiber channel;

Fig. 4b correction means in a fiber transmission channel with a coupling means from a free-space in a fiber channel;

Fig. 5 fiber transmission channel with a free-space receiver to measure in two non-orthogonal states;

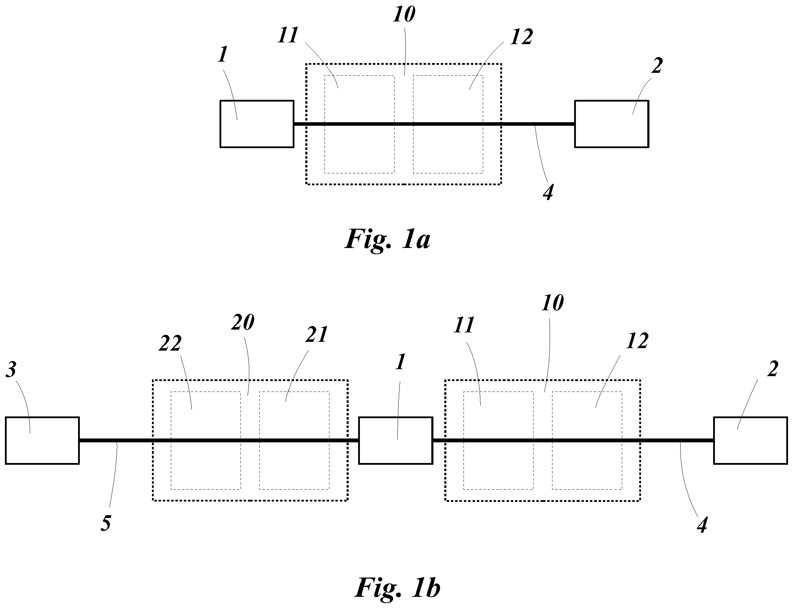

Fig. 1a shows a schematic setup for an emitter 1 connected via a first transmission means 4 with a first receiver 2. The emitter 1 produces polarized photons and sets a local polarized reference frame in at least two non-orthogonal or complementary polarization states. The polarized photons are transmitted in the first transmission means 4 to the first receiver 2. The first receiver 2 can measure the photons in at least two non-orthogonal polarization states. To set a common reference frame in the emitter 1 and the first receiver 2, a first correction means 10 is arranged in the first transmission means 4 to correct any unitary transformation of the polarization of the photons caused by the first transmission means 4. To compensate any unitary transformation in at least two non-orthogonal states, the first correction means 10 comprises a first correction component 11 and a second correction component 12. Both correction components 11 and 12 can be used independently to set the common reference frame in the emitter 1 and the first receiver 2 independently for the first and the second non-orthogonal state. For example, the first correction component 11 is used to set the first non-orthogonal state of the emitter 1 in the first receiver 2, and the second correction component 12 is used to set the second non-orthogonal state of the emitter 1 in the first receiver 2. With that, a simple two-step alignment method is possible that ensures complete alignment of the entire Poincare-sphere from transmitter to receiver without the need for iterative alignment of two mutually unbiased measurement basis. The emitter 1 in Fig. 1a can be a laser with an optical element or any other component generating polarized photons in at least two non-orthogonal polarization states.

Fig. 1b shows a schematic setup for an emitter 1 connected via a first transmission means 4 with a first receiver 2 and via a second transmission means 5 with a second receiver 3. Fig. 1b differs from Fig. 1a only in that in the second transmission means 5, a second correction means 20 is arranged, comprising a first correction component 21 and a second correction component 22. The second correction means 20 is arranged in the second transmission means 5 to compensate any unitary transformation in at least two non-orthogonal states by the second transmission means 5. Both correction components 21 and 22 can be used independently to set the common reference frame in the emitter 1 and the second receiver 3 independently for the first and the second non-orthogonal state. The emitter 1 in Fig. 1b can be a laser with an optical element or any other component generating polarized photons in at least two non-orthogonal polarization states and a separation or switching component to transmit the photons to the first and/or the second receiver 2 and 3. It is also possible that the emitter 1 in Fig. 1b is an entangled photon source producing photon pairs entangled in the polarization. The first photon of each entangled photon pair is sent via the first transmission channel 4 to the first receiver 2 and the second photon of each entangled photon pair is sent via the second transmission channel 5 to the second receiver 3. In Fig. 1b, the simple two-step alignment method from Fig. 1a has to be performed for the first receiver 2 with the first correction means 10, and a second time for the second receiver 3 with the second correction means 20.

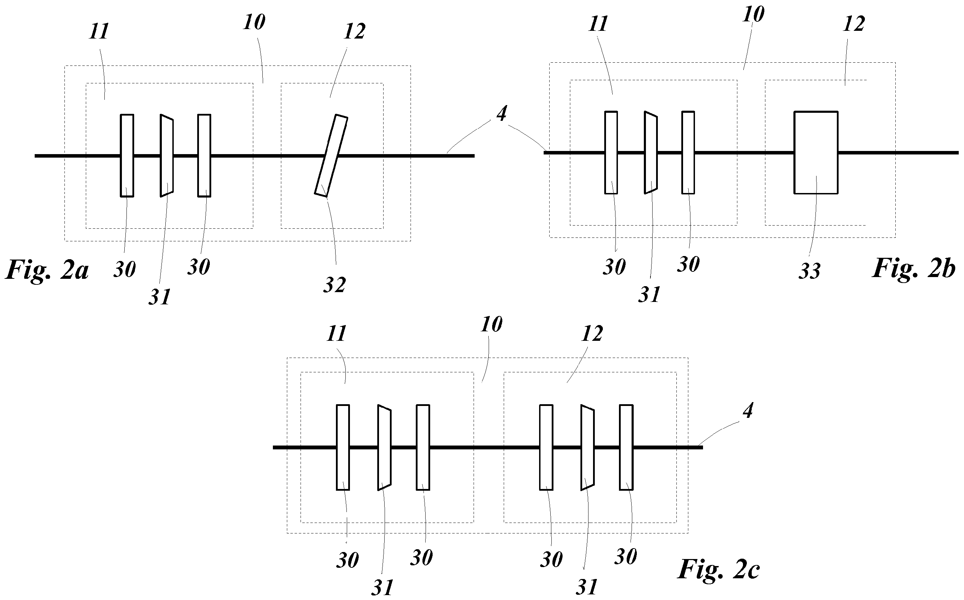

Fig. 2a shows a first inventive configuration of the first correction means 10 in the first transmission means 4. The first correction component 11 comprises a first quarter wave-plate 30, a half wave-plate 31, and a second quarter-wave plate 30. The second correction component comprises a tilted wave-plate 32. With the separate first and second correction components 11 and 12, the independent two-step alignment method can be performed to set a common reference frame between the emitter 1 and the receiver 2.

Fig. 2b shows a second inventive configuration of the correction means 10 in the first transmission means 4. This differs from Fig. 2a only in that the second correction component 12 comprises a Babinet compensator 33. Fig. 2c shows a third inventive configuration of the correction means 10 in the first transmission means 4. This differs from Fig. 2a only in that the second correction component 12 comprises a first quarter wave-plate 30, a half wave-plate 31, and a second quarter-wave plate 30. All inventive examples of the Fig. 2a to 2c can also be implemented as the second correction means 20. It is also possible to use a variable wave-plate as a second correction component 12.

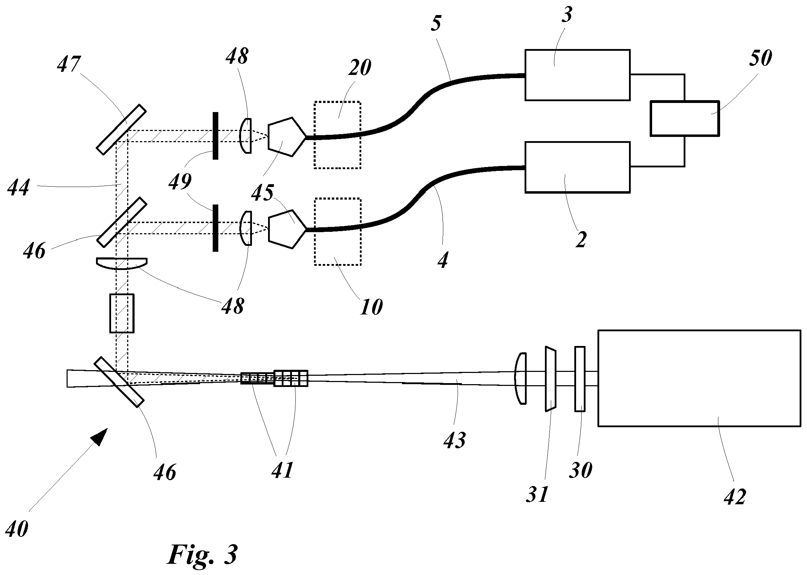

Fig. 3 shows a setup for providing a common reference frame between the emitter 1 and two receivers 2 and 3. In this inventive example, the emitter 1 is an entangled photon source 40, here as an example in a type-0 SPDC process, a high energy pump photon, emitted from a laser 42 on the first photon path 43 with polarization H, can produce a pair of photons HH with lower energy traveling on the second photon path 44 to coupling means 45. In this case, H denotes some particular optical axis with respect to the nonlinear photon pair source. Then, for example, by placing two down-converters, preferably crystals 41 with their optical axes rotated by 90 degrees in sequence and pumping this crossed crystal configuration pump photons in a superposition mode $|H\rangle + |V\rangle$ which can be adjusted by a half-wave plate 30 and a quarter-wave plate 31 behind the laser 42, a maximally polarization-entangled Bell state

$$|\Phi\rangle = \frac{1}{\sqrt{2}}\left(|H\rangle|H\rangle + e^{i\varphi}|V\rangle|V\rangle\right)$$ can be produced. The photons are guided by dichroic mirrors 46, mirrors 47, and lenses 48 to the coupling means 45 into the first and second transmission channels 4 and 5.

The two transmission channels 4 and 5 guide the photons to the first receiver 2, in the following called Alice, and to the second receiver 3, in the following called Bob. Alice 2 and Bob 3 each have a detection means, preferably a polarization analyzer that detects the polarization of single photons. The detection means, preferably the polarization analyzer can consist of a polarizing beam splitter cube and a number of wave-plates to perform polarization measurements for arbitrary polarization states, and is shown in detail in Fig. 6. The unique quantum feature of such entangled Bell states is that they also exhibit correlations in other measurement bases. In order to exploit the polarization correlations in quantum information processing, the photon pairs must be transmitted to distant measurement sites (Alice 2 and Bob 3). Since the transmission channel can introduce a transformation of the polarization reference frames, Alice 2 and Bob 3 and the entangled photon source 40 must set a common polarization reference frame to verify and exploit the nonlocal correlations present in the entangled state.

In this invention, a simple two-step alignment method is proposed that ensures complete alignment of the entire Poincare-sphere from emitter 1, both receiver 2 and 3 without the need for iterative alignment of two mutually unbiased measurement basis. The alignment procedure comprises the following steps:
The entangled photon source is aligned and calibrated to produce a particular polarization-entangled state in the local reference frame, as defined for example by the axes of the non-linear crystal 41, or the Polarizing beam splitter in a Sagnac loop source of entangled photons. The polarization correlations that reflect a particular Bell state are then ensured in the local measurement basis. The measurements of theses polarization correlations are performed using calibrated thin film polarizers 49, inserted before the first and second transmission channels 4 and 5. For example, the maximally-entangled Phi+ state exhibits correlation in any measurement basis. Thus, in order to set this particular state, it is sufficient to ensure (I) the maximization of the detection of the H photons in the first receiver 2 and the maximization of the detection of the H photons in the second receiver 3, which, for example, can be realized when the joint detection probability for HV or VH coincidence detection of photon pairs is minimized, or the joint detection probability for HH or VV coincidence detection of photon pairs is maximized. The coincidence detection is the detection of two photons in the coincidence window. For that, the detectors (not shown in Fig. 3) send a signal, preferably an electrical signal to the coincidence logic 50, which counts a coincidence when two photons, one in each receiver 2 and 3, are detected at the same time, taking different distances and cable lengths into account. I.e., when the two thin film polarizers are in parallel, there should be a minimum of two-photon detection events registered by single-photon detectors located in the first and second receivers 2 and 3. This first step is realized for the emitter 1 and the first and second receivers 2 and 3, with the first correction component 11 of the first correction means 10 and/or the first correction component 21 of the second correction means 20.

Once this has been achieved with sufficient contrast between HV, VH, HH and VV, the local polarization measurements are changed to another measurement basis in the local reference frame. In the example of the Phi+ state, a maximum or minimum of two-photon detection events is also expected for measurements in a non-orthogonal state measurement basis. This can be achieved by changing the pump polarization, specifically the relative phase phi between the horizontal and vertical pump photon components (which drive the two SPDC possibilities). The alignment of the HV basis in step (I) has ensured that HV or VH coincidence detection of photon pairs is minimized, or the joint detection probability for HH or VV coincidence detection of photon pairs is maximized, and is ambiguous with respect to the relative phase phi. This transformation can be understood as a rotation of the Poincare-sphere about the axis combining H and V. This remaining Poincare-sphere transformation is adjusted in a manner that does not introduce an additional rotation of the HV basis, by introducing only an additional relative variable phase between the basis vectors of the polarization basis used for the alignment in step (I). This can be achieved by the second correction component 12 of the first correction means 10 and/or the second correction 22 of the second correction means 20, for example by first quarter wave-plate 30, a half wave-plate 31, and a second quarter-wave plate 30, or a tilted wave-plate 32, or a Soleil Babinet Compensator that introduces only a relative phase with respect to the HV basis of either the entangled photon source (non-linear crystal axis), or the polarizing beam splitter of the detection means. In the case of a polarization-entangled photon source, this phase can also be absorbed into the phase of the entangled photon generation.

As an emitter 1, an entangled photon source in Sagnac configuration is also possible. These entangled photon sources are well known.

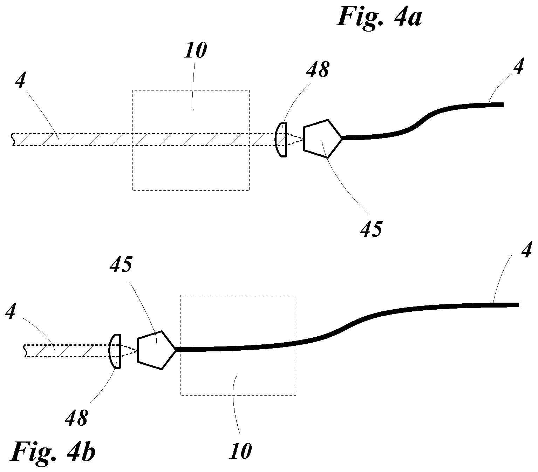

Fig. 4 shows different positions of the correction means 10 for a first transmission channel 4, comprising a free-space transmission section and a fiber transmission section connected via a coupling means 45. The correction means 10 can be arranged in the free-space transmission section (Fig. 4a) or in the fiber transmission section (Fig. 4b).

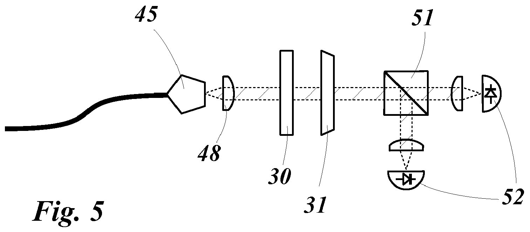

Fig. 5 shows a possible variant of a detection means, preferably a polarization analyzer for a first and/or second receiver 2 and/or 3. It can consist of a polarizing beam splitter 51, a half-wave plate 30, and a quarter-wave plate 31 to perform polarization measurements for arbitrary polarization states.

Reference signs

1    emitter
2    first receiver
3    second receiver
4    first transmission means
5    second transmission means

10    first correction means
11    first correction component of the first correction means
12    second correction component of the first correction means

20    second correction means
21    first correction component of the second correction means
22    second correction component of the second correction means

30    half-wave plate
31    quarter-wave plate
32    tilted wave plate
33    Babinet compensator

40    entangled photon source
41    crystal
42    laser
43    first photon path
44    second photon path
45    coupling means
46    dichroic mirrors
47    mirrors
48    lens
49    polarizer
50    coincidence logic
51    polarizing beam splitter
52    detector

**Claims**

1. A method to provide an emitter (1) and a receiver (2) with a common polarization reference frame
   wherein the emitter (1) comprises a source to produce polarized photons in at least two non-orthogonal polarizations,
   wherein the receiver (2) comprises a detection means to determine the polarization of the polarized photons in at least two non-orthogonal polarization states,
   wherein the emitter (1) and receiver (2) are connected via an optical channel, wherein the optical channel comprises a transmission means (4) to guide the polarized photons from the emitter to the receiver, and a first correction means (10) to correct any unitary transformation of the polarization of the photons caused by the optical channel,
   wherein the first correction means (10) consists of a first correction component (11) and a second correction component (12), wherein preferably the first and second correction components (11, 12) are separate components,
wherein the method comprises the steps of

I) providing a local polarization reference frame with a local polarization reference means in the emitter (1) with at least two complementary or non-orthogonal polarization states, a first local polarization reference state and a second local polarization reference state,

II) performing one or more calibration steps by adjusting the first correction component (11) of the correction means (10) and maximization and/or minimization of the detected photons in the detection means in the receiver in the first reference polarization state, in order to set the first local polarization reference state in the receiver,

III) performing one or more calibration steps by adjusting the second correction component (12) of the correction means (10) and maximization and/or minimization of the detected photons in the detection means in the receiver in the second reference polarization state in order to set the second local polarization reference state in the receiver.

2.  Method according to claim 1,
    wherein the first and/or the second correction component (11, 12) of the first correction means (10) comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer.

3.  Method according to one of the claims 1 or 2,
    wherein the local polarization reference means comprises one of a polarizing means, or a polarizing beam splitter, or a polarizer, or down converted photons, or a non-linear crystal, or a laser producing polarized photons.

4.  A method to provide an emitter (1) and two receivers (2, 3) with a common polarization reference frame, wherein the emitter (1) is a laser (42) or a photon source producing polarized photons in at least two non-orthogonal polarizations, and
    wherein the first receiver (2) comprises a first detection means to determine the polarization of the polarized photons in at least two non-orthogonal polarization states and the second receiver (3) comprises a second detection means to determine the polarization of the polarized photons in at least two non-orthogonal polarization states, and
    wherein a first optical channel is connecting the emitter and the first receiver, comprising a first transmission means (4) to guide the polarized photons from the emitter (1) to the first receiver (2), and a second optical channel is connecting the emitter (1) and the second receiver (3), comprising a second transmission means (5) to guide the polarized photons from the emitter (1) to the second receiver (3), and wherein the first optical channel comprises a first correction means (10) to correct any unitary transformation of the polarization of the photons caused by the first optical channel, and/or wherein the second optical channel comprises a second correction means (20) to correct any unitary transformation of the polarization of the photons caused by the second optical channel, and wherein the first and/or second correction means (10, 20) each consist respectively of a first correction component (11, 21) and a second correction component (12, 22), and wherein the emitter (1) sends polarized photons in the first optical channel to the first receiver (2) and in the second optical channel to the second receiver (3),
wherein the calibration of the common polarization reference frame between the emitter (1) and the first and/or second receiver (2, 3), or between the first and the second receiver (2, 3) is according to one of the claims 1 to 3.

5.  Method according to claim 4,
    wherein the photon source is an entangled photon source producing polarization entangled photon pairs,
    wherein one photon of each entangled photon pair is sent in the first optical channel to the first receiver (2) and the second photon of each entangled photon pair is sent in the second optical channel to the second receiver (3).

6.  Method according to claim 5, wherein the method comprises the further steps of

    IV) performing one or more calibration steps by adjusting the first correction component (11, 21) of the first and/or second correction means (10, 20) and maximization and/or minimization of the correlations of the entangled photon pairs in the first emitter polarization state in order to set the first local polarization state in the first and/or second receiver, and/or

    V) performing one or more calibration steps by adjusting the second correction component (12, 22) of the first and/or second correction means (10, 20) and maximization and/or minimization of the correlations of the entangled photon pairs in the second emitter polarization state in order to set the second local polarization state in the first and/or second receiver.

7. A method to provide an emitter (1) and two receivers (2, 3) with a common polarization reference frame, wherein the emitter (1) is an entangled photon source producing polarization entangled photon pairs, and

wherein the first receiver (2) comprises a first detection means to determine the polarization of the polarized photons in at least two non-orthogonal polarization states and the second receiver (3) comprises a second detection means to determine the polarization of the polarized photons in at least two non-orthogonal polarization states, and

wherein a first optical channel, connecting the emitter (1) and the first receiver (2), comprising a first transmission means (4) to guide the polarized photons from the emitter (1) to the first receiver (2), and a second optical channel, connecting the emitter (1) and the second receiver (3), comprising a second transmission means (5) to guide the polarized photons from the emitter (1) to the second receiver (3), and

wherein one photon of each entangled photon pair is sent in the first optical channel to the first receiver (2) and the second photon of each entangled photon pair is sent in the second optical channel to the second receiver (3), and

wherein the first optical channel comprises a first correction means (10) to correct any unitary transformation of the polarization of the photons caused by the first optical channel, and/or wherein the second optical channel comprises a second correction means (20) to correct any unitary transformation of the polarization of the photons caused by the second optical channel, and/or wherein the emitter (1) comprises a first and/or second correction means (10, 20) to correct any unitary transformation of the polarization of the photons caused by the first and/or second optical channel and

wherein the first and/or second correction means (10, 20) each consist respectively of a first correction component (11, 21) and a second correction component (12, 22), and

wherein the calibration of the common polarization reference frame between the emitter (1) and the first and/or second receiver (2, 3) or between the first and the second receiver is according to the steps

     I) providing a local polarization reference frame with a local polarization reference means in the emitter with at least two complementary or non-orthogonal polarization states, a first local polarization reference state and a second local polarization reference state,

     II) performing one or more calibration steps by adjusting the first correction component (11, 21) of the first and/or second correction means (10, 20) and maximization and/or minimization of the correlations of the entangled photon pairs in both receivers in the first local polarization reference state, in order to set the first local polarization reference state in the first and/or second receiver,

     III) performing one or more calibration steps by adjusting the second correction component (12, 22) of the first and/or second correction means (10, 20) and maximization and/or minimization of the detection of the correlations of the entangled photon pairs in both receivers in the second local polarization reference state, in order to set the second local polarization reference state the in first and/or second receiver.

8. A method according to claim 7, wherein the first and/or the second correction component (11, 12, 21, 22) of the first and/or the second correction means (10, 20) comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer in the fiber or is realized by changing the pump polarization of the entangled photon source.

9. A method according to one of the claims 7 or 8, wherein the local polarization reference means comprises one of a polarizing means, or a polarizing beam splitter, or a polarizer, or down converted photons, or a non-linear crystal.

10. Control device capable of providing a method according to one of the claims 1 to 3, wherein the control device is connected with the first correction means (10) and with the first detection means, and preferably with the local polarization reference means.

11. Control device capable of providing a method according to one of the claims 4 to 9, wherein the control device is connected with the first and/or second correction means (10, 20) and with the first and/or second detection means, and preferably with the local polarization reference means.

12. Computer device with a microprocessor with a nonvolatile memory, wherein the nonvolatile memory comprises an executable program in order to provide a method according to one of the claims 1 to 11, preferably wherein the computer device is the control device.

13. An apparatus comprising an emitter (1) and one receiver (2) with a common polarization reference frame in at least two non-orthogonal polarization states, preferably provided by one of the claims 1 to 3, 10 and 12,

wherein the emitter (1) comprises a source to produce polarized photons in at least two non-orthogonal polarizations, and

wherein the receiver (2) comprises a detection means to determine the polarization of the polarized photons in at least two non-orthogonal polarization states, and

wherein the emitter (1) and receiver (2) are connected via an optical channel comprising a transmission means (4) to guide the polarized photons from the emitter to the receiver, and a first correction means to correct any unitary transformation of the polarization of the photons caused by the optical channel, and

wherein the first correction means consists of at least two separate components, a first correction component and a second correction component.

14. An apparatus comprising an emitter (1) and two receivers (2, 3) with a common polarization reference frame in at least two non-orthogonal polarization states,

preferably provided by one of the claims 4 to 9, 11 and 12

wherein the emitter (1) comprises a laser (42) or a photon source producing polarized photons in at least two non-orthogonal polarizations, and wherein the first receiver (2) comprises a first detection means to determine the polarization of the polarized photons in at least two non-orthogonal polarization states and the second receiver (3) comprises a second detection means to determine the polarization of the polarized photons in at least two non-orthogonal polarization states, wherein the laser (42) or the photon source and the first receiver (2) are connected via a first optical channel comprising a first transmission means (4) to guide the polarized photons from the emitter (1) to the first receiver (2), and a first correction means (10) to correct any unitary transformation of the polarization of the photons caused by the first optical channel, and wherein the laser (42) or the photon source and the second receiver (3) are connected via a second optical channel comprising a second transmission means (5) to guide the polarized photons from the emitter (1) to the second receiver (3), and a second correction (20) means to correct any unitary transformation of the polarization of the photons caused by the second optical channel, wherein the emitter (1) sends polarized photons in the first optical channel to the first receiver (2) and in the second optical channel to the second receiver (3), wherein the first and/or second correction means (10, 20) consists respectively of a first correction component (11,21) and a second correction component (12, 22).

15. An apparatus comprising an emitter (1) and two receivers (2, 3) with a common polarization reference frame in at least two non-orthogonal polarization states, preferably provided by one of the claims 4 to 9, 11 and 12 wherein the emitter (1) comprises an entangled photon source, and wherein the first receiver (2) comprises a first detection means to determine the polarization of the polarized photons in at least two non-orthogonal polarization states and the second receiver (3) comprises a second detection means to determine the polarization of the polarized photons in at least two non-orthogonal polarization stats, and a first optical channel, connecting the emitter (1) and the first receiver (2), comprising a first transmission means (4) to guide the polarized photons from the emitter (1) to the first receiver (2), and a second optical channel, connecting the emitter (1) and the second receiver (3), comprising a second transmission means to guide the polarized photons from the emitter (1) to the second receiver (3), and wherein one photon of each entangled photon pair is sent in the first optical channel to the first receiver (2) and the second photon of each entangled photon pair is sent in the second optical channel to the second receiver (3), wherein the first optical channel comprises a first correction means (10) to correct any unitary transformation of the polarization of the photons caused by the first optical channel, and/or wherein the second optical channel comprises a second correction means (20) to correct any unitary transformation of the polarization of the photons caused by the second optical channel, and/or wherein the emitter (1) comprises a first and/or second correction means (10, 20) to correct any unitary transformation of the polarization of the photons caused by the first and/or second optical channel and wherein the first and/or second correction means (10, 20) each consist respectively of a first correction component (11, 21) and a second correction component (12, 22).

*Fig. 1a*

*Fig. 1b*

EP 3 771 117 A1

Fig. 2b

12
33
10
30
31
11
30

4

Fig. 2c
4
12
30
31
30
10
30
31
11
30

12
10
32
11
30
31
30

Fig. 2a

16

Fig. 3

*Fig. 4a*

*Fig. 4b*

EP 3 771 117 A1

*Fig. 5*

19

Europäisches
Patentamt

European
Patent Office

Office européen
des brevets

# EUROPEAN SEARCH REPORT

Application Number

EP 19 18 8180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHEIDL T ET AL: "Space-to-ground quantum key distribution", PROCEEDINGS OF SPIE, SPIE, 1000 20TH ST. BELLINGHAM WA 98225-6705 USA, vol. 11180, 12 July 2019 (2019-07-12), pages 111801W-111801W, XP060125505, ISSN: 0277-786X, DOI: 10.1117/12.2535987 ISBN: 978-1-5106-2687-4 * the whole document * | 1-15 | INV. H04B10/70 |
| A | US 2009/268276 A1 (LEE KIM [US] ET AL) 29 October 2009 (2009-10-29) * paragraph [0008] * * paragraph [0021] * * paragraph [0037] - paragraph [0046]; figures 1-5 * | 1-15 | |
| A | PENG-LIANG GUO ET AL: "Self-error-rejecting quantum state transmission of entangled photons for faithful quantum communication without calibrate reference frames", ARXIV.ORG, CORNELL UNIVERSITY LIBRARY, 201 OLIN LIBRARY CORNELL UNIVERSITY ITHACA, NY 14853, 1 September 2018 (2018-09-01), XP081573780, DOI: 10.1209/0295-5075/127/60001 Sections I-II; * abstract; figures 1-3 * | 1-15 | TECHNICAL FIELDS SEARCHED (IPC) H04B |

The present search report has been drawn up for all claims

| Place of search | Date of completion of the search | Examiner |
|---|---|---|
| Munich | 30 January 2020 | Koch, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 8180

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2020

| Patent document cited in search report | Publication date | Patent family member(s) | Publication date |
|---|---|---|---|
| US 2009268276 A1 | 29-10-2009 | NONE | |

For more details about this annex : see Official Journal of the European Patent Office, No. 12/82